# EUROPEAN PATENT APPLICATION

(11) **EP 4 831 350 A1**
(43) Date of publication of application: **28.10.2026**
(21) Application number: 25757990.4
(22) Date of filing: 10.02.2025
(51) Int. Cl.: C25B 11/077, B01D 53/32, B01D 53/62, B01D 53/76, C25B 1/02, C25B 1/23, C25B 11/052, C25B 11/061, C25B 13/04, C25B 13/05

(54) **LAMINATE, GAS DECOMPOSITION DEVICE, METHOD FOR DECOMPOSING OXYGEN COMPOUND GAS, AND METHOD FOR PRODUCING METHANOL**

(30) Priority: 21.02.2024 JP 2024024931
(71) Applicant: JFE Steel Corporation, Tokyo 100-0011 (JP); Kyushu University, National University Corporation, Nishi-ku Fukuoka-shi Fukuoka 819-0395 (JP)
(72) Inventor: KOBAYASHI, Mahoko, Tokyo 100-0011 (JP); SHINODA, Mariko, Tokyo 100-0011 (JP); MOGI, Yasuhiro, Tokyo 100-0011 (JP); YOSHIKAWA, Kohei, Tokyo 100-0011 (JP); MATSUYAMA, Naoki, Tokyo 100-0011 (JP); ISHIHARA, Tatsumi, Fukuoka-shi, Fukuoka 819-0395 (JP)
(74) Representative: Haseltine Lake Kempner LLP
(86) International application number: PCT/JP2025/004421
(87) International publication number: WO 2025/177894

(57) **Abstract**

A laminate is provided that can electrolyze an oxygen compound gas, such as CO₂, with high conversion efficiency and can help prevent deterioration of electrolysis performance. In the laminate having a structure in which an electrolyte layer is sandwiched between an anode catalyst layer and a cathode catalyst layer, the cathode catalyst layer contains a perovskite oxide and CuFe₂O₄, and the content of CuFe₂O₄ in the cathode catalyst layer is 10 mass% or more.

## Description

### TECHNICAL FIELD

The present disclosure relates to a laminate, a gas decomposition device, a method of decomposing an oxygen compound gas, and a method of producing methanol.

### BACKGROUND

Due to the effects of global warming worldwide, there is an urgent need to reduce emissions of oxygen compound gases, particularly carbon dioxide (CO₂). As one of the methods for reducing CO₂ emissions, CO₂ capture and storage (CCS, a technology for capturing and storing carbon dioxide underground) is being considered. However, there are many concerns about CCS, such as the safety of long-term CO₂ storage and the selection of appropriate sites, and CCS has not become a fundamental solution for reducing CO₂ emissions.

As another method of reducing CO₂ emissions, CO₂ capture and utilization (CCU, a technology for effective utilization of carbon dioxide) is being considered. In particular, CO₂ electrolysis technology (hereinafter also referred to as electrolysis technology) has attracted attention. In particular, an increase in renewable energy, primarily solar power generation, can result in surplus electrical power. With a view to making effective use of such surplus electrical power, there are high hopes for electrical power storage using electrolysis technology.

Further, carbon monoxide (CO) generated by the electrolysis of CO₂ can be used, for example, as energy in steelworks or as a chemical product raw material such as methanol. In particular, the production of iron and steel in steelworks uses a blast furnace process. In this blast furnace process, iron ore is reduced by coal. Therefore, CO₂ is inevitably produced. Further, in steelworks and the like, hydrogen (H₂) is also used as a raw material in addition to CO. Therefore, it is very important to establish a technology for electrolyzing oxygen compound gases, particularly CO₂, and gases containing water vapor (H₂O) in addition to CO₂.

As an example of such electrolysis technology, in Patent Literature (PTL) 1, a CO₂ decomposition device is described that includes positive and negative electrodes placed in a reaction vessel in which a gas containing CO₂ is present, a voltage generator that applies a voltage between the electrodes, and a CO₂ concentration adjuster that adjusts the CO₂ concentration in the gas.

Further, in PTL 2 and PTL 3, electrochemical cells are described that include an electrode containing Ni as a catalytic component of a cathode catalyst layer (fuel electrode), for example, an electrode containing nickel oxide as a main component, or an electrode containing Ni-containing cermet and a solid oxide.

### CITATION LIST

### Patent Literature

PTL 1: JP 2006-205153 A
PTL 2: JP 5910539 B2
PTL 3: JP 5637652 B2

### SUMMARY

### (Technical Problem)

According to the technology of PTL 1, CO₂ is electrolyzed by applying a high voltage of 10 kV or more to exhaust gas containing more than 10 % CO₂. However, the concentration of CO actually produced is some hundred ppm to some thousand ppm, and the efficiency of converting CO₂ to CO is very low. Further, a large area of land is required to provide an environment for the use of high voltage, limiting the locations where the technology can be installed. Further, CO₂ is reduced by an oxidation reaction of the metal in the cathode, and therefore the metal used in the cathode must be replaced as it deteriorates, which increases costs.

Further, when an electrode containing Ni is used as a catalytic component of the cathode catalyst layer (fuel electrode) as in the technology of PTL 2 and PTL 3, Ni is reoxidized, which increases overvoltage and leads to deterioration of electrolysis performance.

The present disclosure has been developed in view of the current situation, and it would be helpful to provide a laminate that can electrolyze an oxygen compound gas, typified by CO₂, with high conversion efficiency and that can help prevent deterioration of electrolysis performance. Further, it would be helpful to provide a gas decomposition device including the laminate, and a method of decomposing an oxygen compound gas using the laminate. Further, it would be helpful to provide a method of producing methanol, in which methanol is synthesized using a by-product gas generated in the method of decomposing an oxygen compound gas.

The oxygen compound gas is a gas containing an oxygen compound. An oxygen compound is a gaseous compound containing oxygen atoms as part of the structure. Examples of such oxygen compounds include CO₂, H₂O, NOx, and SOx. Further, hereinafter, the conversion efficiency of oxygen compound gas by electrolysis is also referred to as electrolysis efficiency. The property of helping prevent deterioration of electrolysis performance is also referred to as electrolysis performance deterioration resistance. Further, hereinafter, any numerical range expressed using "to" means a range that includes the numerical values before and after "to" as the lower limit value and the upper limit value, respectively.

### (Solution to Problem)

The inventors conducted intensive studies to solve the technical problems outlined above. As a result, the inventors have found that solutions can be achieved by satisfying the following points in a laminate having a structure in which an electrolyte layer is sandwiched between an anode catalyst layer and a cathode catalyst layer.
- The cathode catalyst layer contains both perovskite oxide and CuFe₂O₄.
- The content of CuFe₂O₄ in the cathode catalyst layer is 10 mass% or more.

The present disclosure is based on these discoveries and further studies. Primary features of the present disclosure are as follows.
1. A laminate comprising an electrolyte layer, an anode catalyst layer, and a cathode catalyst layer,
   wherein the laminate has a structure in which the electrolyte layer is sandwiched between the anode catalyst layer and the cathode catalyst layer,
   wherein the cathode catalyst layer contains a perovskite oxide and CuFe₂O₄,
   and wherein the content of the CuFe₂O₄ in the cathode catalyst layer is 10 mass% or more.
2. The laminate according to 1, above, wherein, in the cathode catalyst layer, the content of the perovskite oxide is 40 mass% to 60 mass% and the content of the CuFe₂O₄ is 40 mass% to 60 mass%.
3. The laminate according to 1 or 2, above, wherein the perovskite oxide is La_{α}Sr_{β}Fe_{γ}Mn_{δ}O₃,
   and wherein α, β, y, and δ are each 0 to 1, α + β is 1, and γ + δ is 1.
4. The laminate according to any one of 1 to 3, above, wherein the content of Ni oxide in the cathode catalyst layer is 0.5 mass% or less.
5. The laminate according to any one of 1 to 4, above, wherein the electrolyte layer and the anode catalyst layer each contain a perovskite oxide.
6. A gas decomposition device comprising:
   a feed gas supply unit configured to supply an oxygen compound gas as a feed gas;
   an electrolysis unit configured to generate oxygen and a by-product gas by electrolysis from the oxygen compound gas supplied from the feed gas supply unit;
   an oxygen recovery unit configured to recover the oxygen;
   and a by-product gas recovery unit configured to recover the by-product gas,
   wherein the electrolysis unit comprises the laminate according to any one of 1 to 5, above.
7. The gas decomposition device according to 6, above, wherein the feed gas supply unit comprises a preheating device.
8. A method of decomposing an oxygen compound gas, the method comprising:
   a supply step of supplying an oxygen compound gas as a feed gas to the laminate according to any one of 1 to 5, above;
   an electrolysis step of applying a voltage to the laminate to generate oxygen and a by-product gas from the oxygen compound gas by electrolysis;
   an oxygen recovery step of recovering the oxygen;
   and a by-product gas recovery step of recovering the by-product gas.
9. The method of decomposing an oxygen compound gas according to 8, above, wherein the oxygen compound gas contains CO₂ and the by-product gas contains CO.
10. The method of decomposing an oxygen compound gas according to 8, above, wherein the oxygen compound gas contains CO₂ and H₂O, and the by-product gas contains CO and H₂.
11. The method of decomposing an oxygen compound gas according to any one of 8 to 10, above, wherein a supply temperature of the oxygen compound gas is 100 °C or higher and 800 °C or lower.
12. The method of decomposing an oxygen compound gas according to any one of 8 to 11, above, wherein the voltage applied in the electrolysis step is 0.6 V or more and 2.0 V or less.
13. A method of producing methanol, the method comprising synthesizing methanol using the by-product gas generated in the method of decomposing an oxygen compound gas according to any one of 8 to 12, above.

### (Advantageous Effect)

According to the present disclosure, a laminate for electrolysis can be obtained that can achieve both high electrolysis efficiency and excellent electrolysis performance deterioration resistance. Further, according to the laminate of the present disclosure, high electrolysis efficiency can be obtained even when the applied voltage is relatively low, particularly 2 V or less, and therefore the generation of Joule heat can be suppressed, which is extremely advantageous from the viewpoint of effective energy utilization.

### BRIEF DESCRIPTION OF THE DRAWINGS

In the accompanying drawings:
FIG. 1 is a schematic diagram illustrating an example of a laminate according to an embodiment of the present disclosure;
FIG. 2 is a schematic diagram illustrating an example of a gas decomposition device according to an embodiment of the present disclosure;
FIG. 3 is a graph illustrating a relationship between minimum current density and voltage applied to a laminate for each mass ratio of LSFM to CFO in a cathode catalyst layer; and
FIG. 4 is a graph illustrating a relationship between mass ratio of LSFM to CFO in a cathode catalyst layer and minimum current density and production volume ratio.

### DETAILED DESCRIPTION

The following describes embodiments of the present disclosure. First, a laminate according to an embodiment of the present disclosure is described.

### [1] Laminate

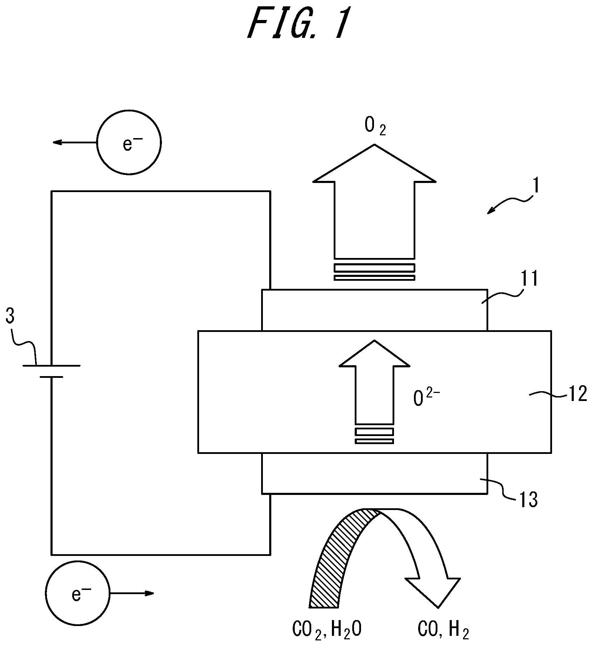

The laminate according to an embodiment of the present disclosure includes an electrolyte layer, an anode catalyst layer, and a cathode catalyst layer, as illustrated in FIG. 1. The laminate has a structure in which the electrolyte layer is sandwiched between the anode catalyst layer and the cathode catalyst layer (a so-called sandwich structure). Further, the laminate can be said to be a laminate obtained by laminating an anode catalyst layer on one side of an electrolyte layer and laminating a cathode catalyst layer on the side of the electrolyte layer opposite to the side on which the anode catalyst layer is laminated. In FIG. 1, reference sign 1 denotes the laminate, 11 denotes the anode catalyst layer, 12 denotes the electrolyte layer, 13 denotes the cathode catalyst layer, and 3 denotes a power supply.

First, the principle of electrolyzing CO₂ into CO and O₂ using the laminate according to an embodiment of the present disclosure is described.

### (Principle of CO₂ electrolysis)

As illustrated in FIG. 1, while a voltage is applied between the anode catalyst layer and the cathode catalyst layer of the laminate, an oxygen compound gas containing CO₂ is supplied so as to come into contact with the laminate, particularly the cathode catalyst layer. As a result, CO₂ contained in the oxygen compound gas is electrolyzed into CO and O₂. At this time, the following reactions occur in the cathode catalyst layer and the anode catalyst layer, respectively.
- Cathode catalyst layer

   CO₂ + 2e⁻ → CO + O²⁻ (1)
- Anode catalyst layer

   2O²⁻ → O₂ + 4e⁻ (2)

That is, in the cathode catalyst layer, CO₂ receives electrons, and the reaction of the above equation (1) occurs. This results in the generation of CO. On the other hand, in the anode catalyst layer, O²⁻ generated in the cathode catalyst layer diffuses through the electrolyte layer and reaches the anode catalyst layer, where the reaction of the above equation (2) occurs. This removes electrons from O²⁻ to generate O₂.

When H₂O is electrolyzed, the following reactions occur in the cathode catalyst layer and the anode catalyst layer.
- Cathode catalyst layer

   H₂O + 2e⁻ → H₂ + O²⁻ (3)
- Anode catalyst layer

   2O²⁻ → O₂ + 4e⁻ (4)

Next, the electrolyte layer, the anode catalyst layer, and the cathode catalyst layer that constitute the laminate according to an embodiment of the present disclosure are described.

### (Electrolyte layer)

The electrolyte layer conducts O²⁻ from the cathode side to the anode side when a voltage is applied between the anode catalyst layer and the cathode catalyst layer. In the laminate according to an embodiment of the present disclosure, the material of the electrolyte layer is not particularly limited, and may be any material commonly used for electrolysis, such as a spinel oxide or a perovskite oxide. In particular, the electrolyte layer preferably contains a perovskite oxide. Perovskite oxides have high ionic conductivity even at low temperatures. The perovskite oxide is not particularly limited, but a perovskite oxide containing two or more elements selected from La, Sr, Ga, Mg, Zr, and Y is preferred. This makes it possible to achieve high electrolysis efficiency even when a relatively low voltage is applied between the anode catalyst layer and the cathode catalyst layer. In the electrolyte layer, a spinel oxide or a perovskite oxide may be used alone. Further, the electrolyte layer may contain both a spinel oxide and a perovskite oxide. When a spinel oxide and a perovskite oxide are both contained, the content of the spinel oxide in the electrolyte layer is preferably 30 mass% or less, and the content of the perovskite oxide is preferably 70 mass% or more. The electrolyte layer may contain substances other than a spinel oxide and a perovskite oxide, provided that the total amount of the other substances is 10 mass% or less. Examples of the other substances include oxides other than spinel oxides and perovskite oxides, and inevitable impurity.

### (Anode catalyst layer)

The anode catalyst layer is formed on one side of the electrolyte layer, functions as an anode, and promotes the reactions represented by the above equations (2) and (4). According to the laminate of an embodiment of the present disclosure, a material generally used for electrolysis, that is, a highly active material that quickly recombines oxygen ions (O²⁻) into oxygen molecules (O), is used as the anode catalyst layer. In particular, the anode catalyst layer preferably contains a perovskite oxide. The perovskite oxide is not particularly limited, but a perovskite oxide containing one or more elements selected from Ba, La, and Co is preferred. Examples of such perovskite oxides include BaₘLaₙCoO₃. Here, m and n are each 0 to 1, and m + n is 1. Further, m is preferably 0.1 to 1. Further, m is more preferably 0.5, because this minimizes electrical resistance. The anode catalyst layer may contain substances other than the perovskite oxide, provided that the total amount of the other substances is 10 mass% or less. Examples of the other substances include oxides other than perovskite and inevitable impurity. However, Ni oxide content is preferably 0.5 mass% or less.

### (Cathode catalyst layer)

The cathode catalyst layer is formed on the electrolyte layer, opposite the anode catalyst layer. The cathode catalyst layer functions as a cathode and also promotes the reactions represented by the above equations (1) and (3). As described above, it is extremely important that the cathode catalyst layer of the laminate according to an embodiment of the present disclosure satisfies both the following requirements.
- The cathode catalyst layer contains both perovskite oxide and CuFe₂O₄.
- The content of CuFe₂O₄ in the cathode catalyst layer is 10 mass% or more.

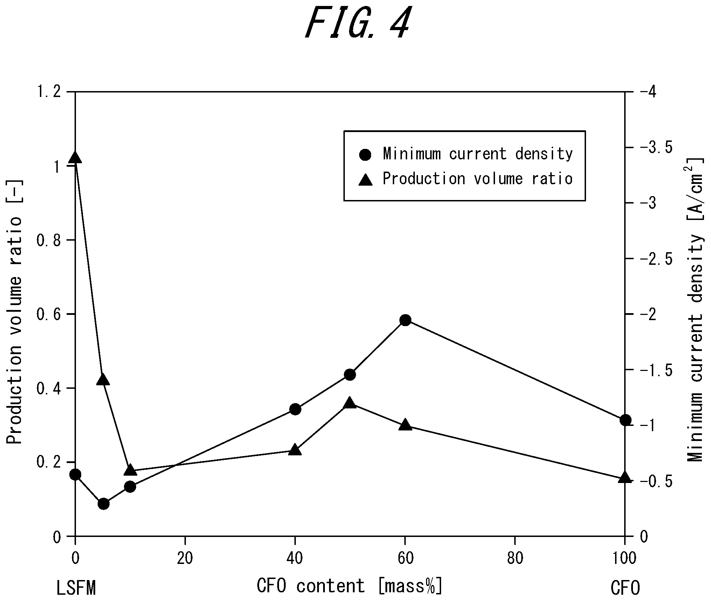

That is, as illustrated in FIG. 4, which plots data obtained from examples described later, by containing both a perovskite oxide and CuFe₂O₄, which is a spinel oxide, in the cathode catalyst layer, and by setting the CuFe₂O₄ content to 10 mass% or more, it is possible to achieve both high electrolysis efficiency and excellent electrolysis performance deterioration resistance. The methods for evaluating the electrolysis efficiency and the electrolysis performance deterioration resistance are as described for the examples below. Here, the content of CuFe₂O₄ is preferably 20 mass% or more. The content of CuFe₂O₄ is more preferably 30 mass% or more. The content of CuFe₂O₄ is even more preferably 40 mass% or more. The content of CuFe₂O₄ is preferably 95 mass% or less. The content of CuFe₂O₄ is more preferably 85 mass% or less. The content of CuFe₂O₄ is even more preferably 70 mass% or less. The content of CuFe₂O₄ is even more preferably 60 mass% or less.

The content of the perovskite oxide is preferably 5 mass% or more. The content of the perovskite oxide is more preferably 15 mass% or more. The content of the perovskite oxide is even more preferably 30 mass% or more. The content of the perovskite oxide is even more preferably 40 mass% or more. The content of the perovskite oxide is preferably 90 mass% or less. The content of the perovskite oxide is more preferably 80 mass% or less. The content of the perovskite oxide is even more preferably 70 mass% or less. The content of the perovskite oxide is even more preferably 60 mass% or less.

In particular, by setting the content of the perovskite oxide to 40 mass% to 60 mass% and the content of CuFe₂O₄ to 40 mass% to 60 mass%, higher electrolysis efficiency can be obtained, which is extremely advantageous compared to when the cathode catalyst layer is made of only the perovskite oxide or only CuFe₂O₄.

The cathode catalyst layer may contain substances other than the perovskite oxide and CuFe₂O₄, provided that the total amount of the other substances is 10 mass% or less. Examples of the other substances include spinel oxides other than CuFe₂O₄, oxides other than perovskite and spinel oxides, and inevitable impurity.

Further, among the substances other than the perovskite oxide and the CuFe₂O₄ contained in the cathode catalyst layer, Ni oxide content is preferably 0.5 mass% or less. By decreasing the content of Ni oxide in the cathode catalyst layer, it is possible to more effectively prevent the deterioration of electrolysis performance due to overvoltage. Further, the generation of methane in the electrolysis of CO₂ and H₂O described above can also be suppressed, and when methanol is synthesized using the by-product gas of the electrolysis described above, it becomes possible to produce methanol more efficiently. That is, in the electrolysis described above, a methanation reaction may occur as a side reaction of the electrolysis. In particular, when the cathode catalyst layer contains a component such as metallic Ni that improves the reaction activity of the surface by dissociating and adsorbing H₂, the methanation reaction becomes pronounced. Here, when the cathode catalyst layer contains Ni oxide, a part of the Ni oxide may be reduced to metallic Ni during the electrolysis process, which may promote the methanation reaction. In the synthesis of methanol, the lower the methane content in the feed gas, the more efficiently methanol can be produced. That is, when methanol is synthesized using a by-product gas of the electrolysis, it is advantageous for the cathode catalyst layer to have a small content of Ni oxide. Therefore, the content of Ni oxide in the cathode catalyst layer is preferably 0.5 mass% or less. The content of Ni oxide is more preferably 0.1 mass% or less. The content of Ni oxide in the cathode catalyst layer may be 0 mass%. Methanol can be synthesized, for example, by the Fischer-Tropsch reaction.

The content of inevitable impurity in the cathode catalyst layer is preferably 1.0 mass% or less. The content of inevitable impurity is more preferably 0.5 mass% or less. The content of inevitable impurity is even more preferably 0.1 mass% or less. The content of inevitable impurity may be 0 mass% (the same applies to the content of inevitable impurity in the electrolyte layer and the anode catalyst layer).

Further, the perovskite oxide used in the cathode catalyst layer is not particularly limited, but is preferably La_{α}Sr_{β}Fe_{γ}Mn_{δ}O₃. Here, α, β, γ, and δ are each 0 to 1, α + β is 1, and γ + δ is 1. Further, it is more preferable that α is 0.5 to 1 and γ is 0.05 to 0.3.

Further, as a combination of the electrolyte layer, anode catalyst layer, and cathode catalyst layer, it is preferable that the electrolyte layer and anode catalyst layer are made of perovskite oxide, and the cathode catalyst layer is made of perovskite oxide and CuFe₂O₄, which is a spinel oxide. This makes it possible to more advantageously improve the electrolysis efficiency.

The electrolyte layer, the anode catalyst layer, and the cathode catalyst layer can be formed, for example, by mixing oxides of the metals (elements) that constitute each layer to have a defined composition, and then firing the mixture. Further, nitrates or chlorides of the metals that constitute each layer may also be used.

Further, the laminate according to an embodiment of the present disclosure can be formed, for example, by applying a metal oxide or the like for the anode catalyst layer to one surface of the electrolyte layer having a plate-like shape and a metal oxide or the like for the cathode catalyst layer to the other surface of the electrolyte layer, followed by firing. Further, the cathode catalyst layer can be formed by processing the electrolyte layer into a cylindrical shape, applying a metal oxide or the like for the cathode catalyst layer to the inner surface thereof, and applying a metal oxide or the like for the anode catalyst layer to the outer surface thereof, followed by firing.

Further, the ratio of thicknesses of the electrolyte layer, the anode catalyst layer, and the cathode catalyst layer is preferably such that, relative to the anode catalyst layer being 1, the cathode catalyst layer is 0.5 to 5, and the electrolyte layer is 10 to 50. When the thickness of the electrolyte layer is too small relative to the anode catalyst layer or the cathode catalyst layer, the electrolyte layer may not be able to withstand the thermal stress and may crack. On the other hand, when the thickness of the electrolyte layer is excessively large, the Joule heat increases due to the increase in electrical resistance, which may result in a decrease in the electrolysis efficiency.

Other than the above, there are no particular limitations, and a typical configuration of a laminate for electrolysis can be appropriately adopted.

### [2] Gas decomposition device

Next, a gas decomposition device according to an embodiment of the present disclosure is described.

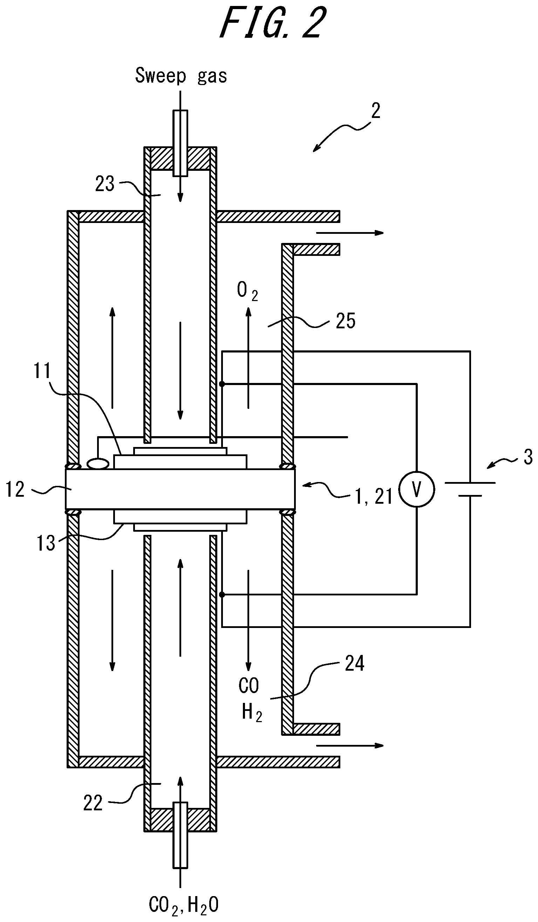

As illustrated in FIG. 2, the gas decomposition device according to an embodiment of the present disclosure includes:
a feed gas supply unit configured to supply an oxygen compound gas as a feed gas;
an electrolysis unit configured to generate oxygen and a by-product gas by electrolysis from the oxygen compound gas supplied from the feed gas supply unit;
an oxygen recovery unit configured to recover the oxygen;
and a by-product gas recovery unit configured to recover the by-product gas,
wherein the electrolysis unit includes the laminate described under [1] above. In FIG. 2, reference sign 1 denotes the laminate, 11 denotes the anode catalyst layer, 12 denotes the electrolyte layer, 13 denotes the cathode catalyst layer, 2 denotes the gas decomposition device, 21 denotes the electrolysis unit, 22 denotes the feed gas supply unit, 23 denotes a sweep gas supply unit, 24 denotes the by-product gas recovery unit, 25 denotes the oxygen recovery unit, and 3 denotes the power supply.

### (Feed gas supply unit)

The feed gas supply unit supplies an oxygen compound gas, which serves as a feed gas, to the electrolysis unit, preferably so that the oxygen compound gas comes into contact with the cathode catalyst layer of the laminate. The feed gas supply unit is constituted, for example, by a gas flow passage adjacent to the cathode catalyst layer of the laminate of the electrolysis unit described below. The gas flow passage is defined, for example, by a casing that houses the laminate. A packing or glass seal may be used to prevent gas leakage from the casing. Further, the gas flow passage may be formed by piping, a duct, or the like. Further, the feed gas supply unit may include a device for pumping the feed gas. Examples of such devices include fans and blowers. Further, the feed gas supply unit may include a feed gas preheater and a separator/recovery unit for an oxygen compound such as CO₂. The feed gas preheater and the separator/recovery unit for an oxygen compound may be disposed, for example, in the gas flow passage. Further, from the viewpoint of suppressing a decrease in the temperature of the feed gas, it is preferable to place the feed gas preheater immediately before the electrolysis unit, for example, in the gas flow passage defined by the casing that houses the laminate, or at a position adjacent to the gas flow passage. Examples of the feed gas preheater include a burner and a heat exchanger that utilizes exhaust heat.

The heat source for the heat exchanger may be, for example, waste heat from a steelworks. As waste heat from a steelworks, for example, sensible heat of slag, sensible heat of coke oven gas (COG), sensible heat of sintered ore, and the like can be used. Further, low-temperature exhaust heat of about 200 °C can also be used, and therefore it is also possible to use heating furnace gas and hot blast stove exhaust gas unmodified as the heat source for the heat exchanger. Further, when the feed gas contains CO₂, high-temperature CO and O₂ are produced by electrolysis, and these may be used as a heat source for the heat exchanger.

Further, the oxygen compound gas used as the feed gas preferably contains CO₂, and more preferably contains both CO₂ and H₂O. When the oxygen compound gas contains both CO₂ and H₂O, deterioration of the surface of the cathode catalyst layer is suppressed, contributing to a longer life of the equipment. The ratio of these gases may be set arbitrarily depending on the feed gas supply and the like. In addition, the oxygen compound gas serving as the feed gas may contain gas other than the oxygen compound. Examples of the other gas include Ar and N₂. For example, blast furnace gas that is a by-product of a blast furnace in a steelmaking process, combustion exhaust gas from a hot blast stove or a heating furnace, and the like contain 10 vol% or more of CO₂ and are therefore suitable as the feed gas. Further, gas obtained by subjecting blast furnace gas to a treatment to increase the CO₂ concentration, for example, can be used. Further, CO₂-containing gas generated in other industrial fields can be used.

### (Electrolysis unit)

The electrolysis unit includes the laminate described under [1] above. As illustrated in FIG. 2, an oxygen compound gas supplied as a feed gas from the feed gas supply unit, for example CO₂ or H₂O, is brought into contact with the cathode catalyst layer of the laminate described under [1] above, and is thereby electrolyzed according to the above equations (1) to (4) to generate oxygen and by-product gases.

Here, the electrolysis unit is configured so that a voltage is applied to the laminate described under [1]. For example, the anode catalyst layer and the cathode catalyst layer of the laminate are connected to a power supply via cables. The power supply may be a DC power supply or an AC power supply. However, in the case of an AC power supply, it is necessary to convert into a DC power supply using a converter or the like before the current flows through the laminate. Further, the electrolysis unit may include a casing (housing) for housing the laminate, various measuring instruments such as a voltmeter, a heater for the laminate, and the like. Further, the casing may include a gas flow (inlet) passage for bringing the feed gas into contact with the cathode catalyst layer of the laminate, and a gas flow (recovery) passage for recovering by-product gas and oxygen produced by electrolysis.

### (Oxygen recovery unit and by-product gas recovery unit)

The oxygen recovery unit and the by-product gas recovery unit recover the oxygen and the by-product gas generated in the electrolysis unit, respectively. The oxygen recovery unit and the by-product gas recovery unit are constituted by, for example, gas flow passages adjacent to the anode catalyst layer and the cathode catalyst layer of the laminate of the electrolysis unit. The gas flow passages are defined, for example, by a casing that houses the laminate. Further, the gas flow passages may be formed by piping, ducts, or the like. Further, the oxygen recovery unit and the by-product gas recovery unit may each include a device for pumping or sucking oxygen and by-product gas. Examples of such devices include fans and blowers. The oxygen and the by-product gas generated in the electrolysis unit may be supplied via the oxygen recovery unit and the by-product gas recovery unit to, for example, storage or an apparatus that uses the oxygen and the by-product gas.

### (Other)

In addition, the gas decomposition device according to an embodiment of the present disclosure may include a sweep gas supply unit that supplies a sweep gas to the anode catalyst layer of the laminate in the electrolysis unit. The sweep gas supply unit is constituted, for example, by a gas flow passage adjacent to the anode catalyst layer of the laminate of the electrolysis unit. The gas flow passage is defined, for example, by a casing that houses the laminate. Further, the gas flow passage may be formed by piping, a duct, or the like. Further, the sweep gas supply unit may include a device for pumping or sucking the sweep gas. Examples of such devices include fans and blowers. By supplying a sweep gas to the anode catalyst layer, the O₂ partial pressure on the surface of the anode catalyst layer (hereinafter also referred to as O₂ surface partial pressure) can be decreased, and the O₂ production rate increased. This can be expected to improve the reaction efficiency. For example, by supplying air as a sweep gas, oxygen-enriched air can be produced, which can be used for combustion. The sweep gas is not particularly limited and may be an inert gas such as N₂ or Ar. Further, by absorbing O₂, the O₂ surface partial pressure of the anode catalyst layer can also be decreased.

Other than the above, there are no particular limitations, and a typical configuration of a gas decomposition device using electrolysis can be appropriately adopted.

### [3] Method of decomposing oxygen compound gas

Next, a method of decomposing an oxygen compound gas according to an embodiment of the present disclosure is described.

The method of decomposing an oxygen compound gas according to an embodiment of the present disclosure includes:
a supply step of supplying an oxygen compound gas as a feed gas to the laminate described under [1];
an electrolysis step of applying a voltage to the laminate described under [1] to generate oxygen and a by-product gas from the oxygen compound gas by electrolysis;
an oxygen recovery step of recovering the oxygen;
and a by-product gas recovery step of recovering the by-product gas.

### (Supply step)

In the supply step, an oxygen compound gas as a feed gas is supplied to the laminate described under [1]. Preferably, the oxygen compound gas as the feed gas is supplied so as to come into contact with the cathode catalyst layer of the laminate described under [1]. The oxygen compound gas as the feed gas can be supplied, for example, through a gas flow passage such as a pipe or duct connected to a source of the feed gas.

Further, the temperature at which the feed gas is supplied to the laminate described under [1] is preferably 100 °C or higher. The temperature is preferably 800 °C or lower. The higher the temperature of the feed gas supplied, the more the electrical power required for electrolysis can be decreased. However, from the viewpoint of designing the gas decomposition device, heat generation due to Joule heat from the laminate described under [1] may also be considered. The supply temperature of the feed gas is therefore preferably 400 °C or lower. The supply temperature of the feed gas is preferably 200 °C or higher. The supply temperature of the feed gas may be measured, for example, in the gas flow passage (upstream of the laminate) in the casing that houses the laminate or just before the casing.

Further, in order to control the supply temperature of the feed gas, the feed gas may be preheated. The preheating method is as exemplified under [2] above.

Further, as described under [2] regarding the oxygen compound gas that is the feed gas, the concentration of the oxygen compound is preferably high. For example, the concentration of CO₂ is not particularly limited, but is preferably 10 vol% or more in terms of electrolysis efficiency.

The gas supplied from the feed gas supply (hereinafter also referred to as the supplied gas) may be directly supplied to the laminate described under [1] as the feed gas. Further, for example, CO₂ and the like may be separated and recovered in advance from the supplied gas, and the gas that is separated and recovered (hereinafter also referred to as separated and recovered gas) may be supplied to the laminate described under [1] as the feed gas. The method of separating and recovering CO₂ is not particularly limited. For example, there are methods of liquefying or solidifying CO₂ by pressurizing or cooling, methods of absorbing CO₂ into a basic aqueous solution such as caustic soda and amine, and then separating and recovering by heating or reducing pressure, methods of adsorbing CO₂ onto activated carbon, zeolite, or the like, and then separating and recovering by heating or reducing pressure, and methods of separating and recovering using a CO₂ separation membrane. The CO₂ concentration in the separated and recovered gas is not particularly limited, but is preferably 80 vol% or more. This is advantageous because it allows the gas decomposition device, particularly the laminate used during electrolysis, and the apparatus associated with the laminate to be made smaller.

Further, if desired, the supplied gas may be pre-cleaned of harmful components such as sulfur and NOx.

### (Electrolysis step)

In the electrolysis step, a voltage is applied to the laminate described under [1], and oxygen and by-product gas are generated by electrolysis from the oxygen compound gas, which is the feed gas, in the cathode catalyst layer of the laminate.

The voltage applied in the electrolysis step (the voltage applied between the anode catalyst layer and the cathode catalyst layer of the laminate described under [1]) is preferably 0.6 V or more. The voltage applied is preferably 2.0 V or less. When the applied voltage is less than 0.6 V, the voltage is lower than the theoretical electrolysis voltage, and there is a risk that the electrolysis reaction will not proceed sufficiently. Further, when the applied voltage exceeds 2.0 V, CO₂ is decomposed into solid carbon (C) and O₂, making it difficult to generate CO. Further, Joule heat accumulates in the laminate, which may cause decomposition of the laminate itself.

Further the temperature of the laminate during electrolysis is preferably controlled to 100 °C or higher. The temperature is preferably 900 °C or lower. That is, taking into consideration Joule heat due to electrical resistance, it is preferable to control the temperature of the laminate during electrolysis to 100 °C or higher and 900 °C or lower.

The temperature of the laminate can be controlled by, for example, heating the laminate body with a heater or a heat exchanger using exhaust heat as described above. Further, the temperature of the laminate can be controlled by controlling the supply temperature of the feed gas as described above.

### (Oxygen recovery step and by-product gas recovery step)

In the oxygen recovery step and the by-product gas recovery step, oxygen and by-product gas generated in the electrolysis step are recovered, respectively. The oxygen and by-product gases generated in the electrolysis step can be collected, for example, via gas flow passages adjacent to the anode catalyst layer and the cathode catalyst layer of the laminate of the electrolysis unit, respectively. The recovered oxygen and by-product gas may be supplied to, for example, a storage or an apparatus that uses the oxygen and the by-product gas.

### (Other)

The method of decomposing an oxygen compound gas according to an embodiment of the present disclosure may further include a sweep gas supply step of supplying a sweep gas to the anode catalyst layer of the electrolysis unit. The sweep gas can be supplied, for example, through a gas flow passage adjacent to the anode catalyst layer of the electrolysis unit. The explanation regarding the sweep gas is as described under [2] above.

Further, the method of decomposing an oxygen compound gas according to an embodiment of the present disclosure can be particularly suitably carried out using, for example, the gas decomposition device described under [2].

Conditions other than those described above are not particularly limited, and a conventional method may be used.

### [4] Method of producing methanol

Next, a method of producing methanol according to an embodiment of the present disclosure is described.

According to the method of producing methanol of an embodiment of the present disclosure, methanol is synthesized using a by-product gas generated in the method of decomposing an oxygen compound gas described under [3].

The method of synthesizing methanol is not particularly limited, and may be a conventional method. For example, the method may be carried out by the Fischer-Tropsch reaction. As an example, the by-product gas generated in the electrolysis step of the method of decomposing oxygen compound gas described under [3] is compressed (pressurized) by a compressor. The pressure of the by-product gas after compression is preferably, for example, 1 MPa or more. The pressure is preferably 10 MPa or less. Next, the by-product gas is brought into contact with a catalyst for methanol synthesis, for example, a catalyst using Cu-Zn oxide, to synthesize methanol. The temperature of the catalyst is preferably adjusted to, for example, 200 °C or higher. The temperature is preferably 300 °C or lower.

### EXAMPLES

### (Example 1)

Laminates were prepared as follows.

### <Electrolyte layer>

As the electrolyte layer, perovskite oxide having a composition of La_{0.9}Sr_{0.1}Ga_{0.8}Mg_{0.2}O₃ was used. First, La₂O₃, SrCO₃, Ga₂O₃, and MgO in a molar ratio that would result in a defined composition were mixed in an alumina mortar for 30 min. This mixture was then placed in an alumina crucible, heated from room temperature to 1000 °C over 5 h, and calcined at 1000 °C for 6 h. The mixture was then cooled to room temperature over 5 h. The resulting powder was then mixed in a mortar for 30 min. This powder was then uniaxially pressed into a disk having a diameter of 20 mm by pressing at 20 MPa for 20 min. The formed body was then placed in a rubber bag, vacuum packed, and further isostatically pressed at 300 MPa for 30 min to obtain a pellet. The resulting pellet was then heated from room temperature to 1000 °C over 5 h, further heated to 1500 °C over 5 h, and fired at 1500 °C for 6 h. Subsequently, it was cooled to 1000 °C over 5 h, and then cooled to room temperature over a further 5 h, achieving sintering. In this way, the electrolyte layer having a thickness of 0.3 mm was obtained.

### <Material for forming anode catalyst layer>

As the anode catalyst layer, a perovskite oxide having a composition of Ba_{0.6}La_{0.4}CoO₃ was used. First, defined amounts of Ba(NO₃)₂, La(NO₃)₃·6H₂O, and Co(NO₃)₂·6H₂O were dissolved in water and evaporated to dryness. Then, this was calcined at 400 °C in a fume hood to decompose the nitrates into oxides. The resulting powder was then mixed in a mortar for 30 min. This powder was then placed in an alumina crucible and calcined at 1200 °C for 6 h. The calcined powder was then mixed in a mortar for 30 min to obtain the material for forming the anode catalyst layer.

### <Material for forming cathode catalyst layer>

As the cathode catalyst layer, a mixture of perovskite oxide having a composition of La_{0.6}Sr_{0.4}Fe_{0.9}Mn_{0.1}O₃ (hereinafter also referred to as LSFM) and CuFe₂O₄ (hereinafter also referred to as CFO) in one of various mass ratios listed in Table 1 was used. Here, LSFM and CFO were mixed in a defined mass ratio in a mortar for 30 min to obtain the material for forming the cathode catalyst layer.

### <Formation of anode catalyst layer and cathode catalyst layer (screen printing method)>

Using the material for forming the anode catalyst layer and the material for forming the cathode catalyst layer obtained as described above, the anode catalyst layer was formed on one surface of the electrolyte layer and the cathode catalyst layer was formed on the other surface, by a screen printing method. Specifically, first, ethyl cellulose and the powdered material for forming the anode catalyst layer were mixed in an agate mortar so as to achieve a mass ratio of 8:100. Similarly, ethyl cellulose and the powdered material for forming the cathode catalyst layer were mixed in a mass ratio of 8:100. Next, while adding an appropriate amount of 3-hydroxy-2,2,4-trimethylpentyl dropwise to each of these mixtures, the mixtures were thoroughly mixed until an appropriate viscosity was obtained, stirred for a defined time, and then deaerated. The pastes thereby obtained were applied to the electrolyte layer by the screen printing method. Here, the screen printing was carried out using a 200 mesh stainless steel mesh. The applied area was 8 mm in diameter and the thickness was 5 µm to 10 µm. The electrolyte layer was then placed on an alumina boat and baked at 1100 °C for 30 min. At this time, a platinum wire (0.1 mm diameter) was attached to an end portion of the anode catalyst layer using platinum paste (reference electrode). In this way, the laminate for electrolysis was obtained.

Using the laminate thus obtained, a gas decomposition device as illustrated in FIG. 2 was fabricated. The laminate was sandwiched from above and below between an alumina tube and a Pyrex^{®} (Pyrex is a registered trademark in Japan, other countries, or both) glass ring, heated from room temperature to 800 °C over 2 h, and held at 800 °C for 1 h. The Pyrex glass ring was then softened to form a glass seal. This secured a passage for the feed gas to the laminate, as well as passage for the oxygen and the by-product gas. Next, various voltages were applied between the anode catalyst layer and the cathode catalyst layer by a power supply, and an oxygen compound gas (30 vol% CO₂ / 30 vol% H₂O / 40 vol% Ar) serving as a feed gas was supplied from the feed gas supply unit to the cathode catalyst layer at a flow rate of 100 ml/min, converted to standard conditions (0 °C, 1 atm). Further, air was supplied as a sweep gas from the sweep gas supply unit to the anode catalyst layer at a flow rate of 100 ml/min, also converted to standard conditions (0 °C, 1 atm). The electrolysis was carried out at 800 °C in all cases, and by-product gases such as CO generated by the reduction of CO₂ were recovered from the by-product gas recovery unit, and the generated O₂ was recovered from the oxygen recovery unit. The electrolysis time (total supply time of the feed gas) was 8 h in all cases.

The electrolysis efficiency and the electrolysis performance deterioration resistance were evaluated as follows.

### • Evaluation of electrolysis efficiency

The electrolysis efficiency was evaluated based on the current density during electrolysis and the production volume ratio of CO and H₂. That is, the current density is an index of the electrolysis efficiency, and the higher the current density, the higher the electrolysis efficiency. Here, the evaluation was carried out using the minimum current density when the voltage applied to the laminate was 1.6 V. During electrolysis, the current density becomes negative, and it can be said that the more negative (smaller) the current density, the better the electrolysis efficiency. Further, when CO₂ and H₂O are compared, H₂O is generally easier to electrolyze, while CO₂ is more difficult to electrolyze. Therefore, it can be said that the electrolysis efficiency is better when the volume ratio of CO and H₂ produced in the by-product gas (CO production volume ÷ H₂ production volume, hereinafter also referred to as the production volume ratio) approaches the volume ratio of CO₂ and H₂O contained in the feed gas (CO₂ volume ÷ H₂O volume, hereinafter also referred to as the reference volume ratio). The production volume ratio of CO and H₂ in the by-product gas was determined by gas chromatography analysis.

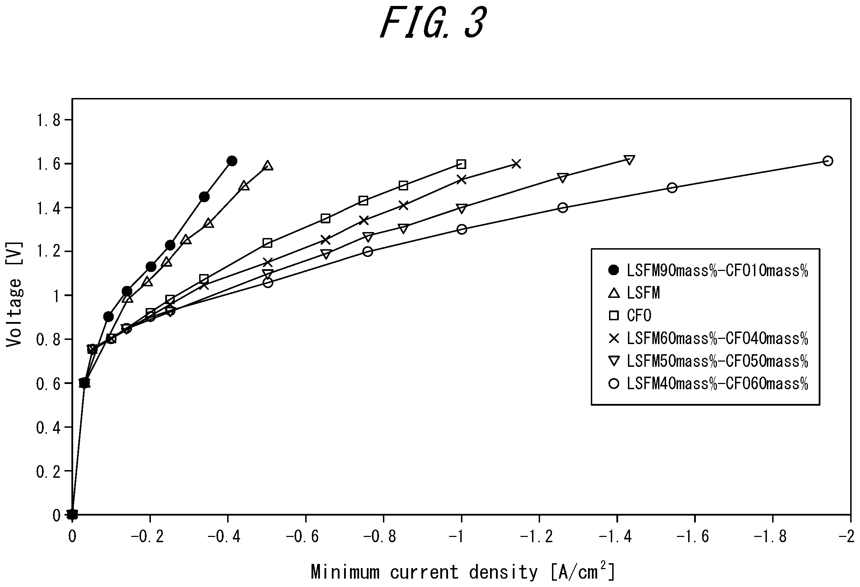

In view of the above, the electrolysis efficiency was evaluated according to the following criteria. The evaluation results are indicated in Table 1. For reference, the relationship between the minimum current density and the voltages applied to the laminates for No. 1 to 5 and 7 is plotted in FIG. 3. Further, FIG. 4 plots the relationship between the mass ratio of LSFM to CFO in the cathode catalyst layer and the minimum current density and the production volume ratio. FIG. 4 illustrates data when a voltage of 1.6 V was applied to the laminates.
A (pass, particularly excellent): minimum current density was -1.10 A/cm² or less and production volume ratio was reference volume ratio - 0.80 or more.
B (pass, excellent): minimum current density was -0.45 A/cm² or less and production volume ratio was reference volume ratio - 0.85 or more (excluding A)
F (fail): minimum current density was greater than -0.45 A/cm², and/or production volume ratio was less than reference volume ratio - 0.85.

### • Electrolysis performance deterioration resistance

The electrolysis performance deterioration resistance was evaluated based on the degree of decomposition of the catalyst on the surfaces of the anode catalyst layer and the cathode catalyst layer of the laminate. Specifically, powder X-ray diffraction measurements were carried out on the surfaces of the anode catalyst layer and the cathode catalyst layer before and after the electrolysis. The sampling range was 2θ = 10° to 80°. The electrolysis performance deterioration resistance was evaluated according to the following criteria.

A (pass, excellent): in both the anode catalyst layer and the cathode catalyst layer, no new peaks were observed in the spectrum obtained by powder X-ray diffraction measurement after electrolysis (peaks other than those observed in the spectrum obtained by powder X-ray diffraction measurement before electrolysis; hereinafter, referred to simply as new peaks).

F (fail): a new peak was observed in at least one of the anode catalyst layer or the cathode catalyst layer.

### [Table 1]

**Table 1**

| No. | Cathode catalyst layer of laminate | | | | Evaluation of electrolysis efficiency | | | | | Evaluation of electrolysis performance deterioration resistance | | | Remarks |
|---|---|---|---|---|---|---|---|---|---|---|---|---|---|
| | Perovskite oxide (LSFM) | | CFO | | Minimum current density | Production volume ratio | Reference volume ratio - 0.85 | Reference volume ratio - 0.80 | Evaluation results | Presence of new peak in anode catalyst layer | Presence of new peak in cathode catalyst layer | Evaluation results | |
| | Presence | Content | Presence | Content | | | | | | | | | |
| | - | mass% | - | mass% | A/cm² | - | - | - | - | - | - | - | |
| 1 | no | 0 | yes | 100 | -1.05 | 0.16 | 0.15 | 0.20 | B | yes | yes | F | Comparative Example |
| 2 | yes | 40 | yes | 60 | -1.95 | 0.30 | 0.15 | 0.20 | A | no | no | A | Example |
| 3 | yes | 50 | yes | 50 | -1.45 | 0.36 | 0.15 | 0.20 | A | no | no | A | Example |
| 4 | yes | 60 | yes | 40 | -1.15 | 0.23 | 0.15 | 0.20 | A | no | no | A | Example |
| 5 | yes | 90 | yes | 10 | -0.45 | 0.18 | 0.15 | 0.20 | B | no | no | A | Example |
| 6 | yes | 95 | yes | 5 | -0.29 | 0.42 | 0.15 | 0.20 | F | no | yes | F | Comparative Example |
| 7 | yes | 100 | no | 0 | -0.56 | 1.02 | 0.15 | 0.20 | B | no | yes | F | Comparative Example |

As can be seen from Table 1, for all of the Examples according to the disclosure in which the cathode catalyst layer contained LSFM, which is a perovskite oxide, and CuFe₂O₄, and the content of CuFe₂O₄ in the cathode catalyst layer was 10 mass% or more, high electrolysis efficiency and excellent electrolysis performance deterioration resistance were both achieved. Further, for all of No. 2 to 4, Examples according to the disclosure, in which the content of CuFe₂O₄ in the cathode catalyst layer was 40 mass% to 60 mass% and the content of the perovskite oxide was 40 mass% to 60 mass%, particularly excellent electrolysis efficiency was obtained.

In contrast, for the Comparative Examples, at least one of the electrolysis efficiency or the electrolysis performance deterioration resistance was not sufficient.

Further, when various perovskite oxides and CuFe₂O₄ were used in the cathode catalyst layer and the CuFe₂O₄ content was varied within a range of 10 mass% or more, it was possible to achieve both high electrolysis efficiency and excellent electrolysis performance deterioration resistance, as in the Examples according to the disclosure.

### (Example 2)

In a gas decomposition device using the No. 4 laminate of Example 1 (hereinafter also referred to simply as the No. 4 laminate) and a laminate having the same configuration as that of the No. 4 laminate except that Ni-YSZ (Ni content: more than 10 mass%) was used for the cathode catalyst layer (hereinafter also referred to as the Ni-YSZ laminate), an oxygen compound gas (50 vol% CO₂ / 50 vol% H₂O) serving as a feed gas was supplied from the feed gas supply unit to the cathode catalyst layer at a flow rate of 13,440 L/min, converted to standard conditions (0 °C, 1 atm). Further, air was supplied as a sweep gas from the sweep gas supply unit to the anode catalyst layer at a flow rate of 13,440 L/min, also converted to standard conditions (0 °C, 1 atm). The electrolysis was carried out at 700 °C in each case, and by-product gases such as CO generated by the reduction of CO₂ were recovered from the by-product gas recovery unit, and the generated O₂ was recovered from the oxygen recovery unit. The voltage applied to the laminate was 1.4 V in each case, and the electrolysis time (total supply time of the feed gas) was 8 h in each case. The amount of each component produced in the by-product gas per unit time was then measured. Further, the by-product gas generated by the electrolysis was collected, dehumidified, and compressed, and then methanol was synthesized using the by-product gas, and the amount of methanol produced per unit time was measured. The measurement results are listed in Table 2. The pressure of the by-product gas after compression was set to 5 MPa in each case.

### [Table 2]

**Table 2**

| Laminate | By-product gas production | | | | | | Methanol production | Remarks |
|---|---|---|---|---|---|---|---|---|
| | CO | H₂ | CO₂ | H₂O | CH₄ | CO + H₂ | | |
| | mol/s | | | | | | mol/s | |
| No. 4 laminate | 2.37 | 1.71 | 1.66 | 0.011 | 0.000 | 4.08 | 0.973 | Example |
| Ni-YSZ laminate | 2.03 | 1.84 | 1.96 | 0.022 | 0.087 | 3.87 | 0.928 | Comparative Example |

As indicated in Table 2, when the Ni-YSZ laminate was used, methane was detected in the by-product gas, whereas when the No. 4 laminate was used, methane was not detected in the by-product gas, and the total amount of carbon monoxide and hydrogen (CO + H₂) produced was increased compared to when the Ni-YSZ laminate was used. Further, when the No. 4 laminate was used, the amount of methanol produced was significantly increased compared to when the Ni-YSZ laminate was used.

### REFERENCE SIGNS LIST

- 1: laminate
- 11: anode catalyst layer
- 12: electrolyte layer
- 13: cathode catalyst layer
- 2: gas decomposition device
- 21: electrolysis unit
- 22: feed gas supply unit
- 23: sweep gas supply unit
- 24: by-product gas recovery unit
- 25: oxygen recovery unit
- 3: power supply

## Claims

1. A laminate comprising an electrolyte layer, an anode catalyst layer, and a cathode catalyst layer,
wherein the laminate has a structure in which the electrolyte layer is sandwiched between the anode catalyst layer and the cathode catalyst layer,
wherein the cathode catalyst layer contains a perovskite oxide and CuFe₂O₄,
and wherein the content of the CuFe₂O₄ in the cathode catalyst layer is 10 mass% or more.

2. The laminate according to claim 1, wherein, in the cathode catalyst layer, the content of the perovskite oxide is 40 mass% to 60 mass% and the content of the CuFe₂O₄ is 40 mass% to 60 mass%.

3. The laminate according to claim 1 or 2, wherein the perovskite oxide is La_{α}Sr_{β}Fe_{γ}Mn_{δ}O₃,
and wherein α, β, γ, and δ are each 0 to 1, α + β is 1, and γ + δ is 1.

4. The laminate according to any one of claims 1 to 3, wherein the content of Ni oxide in the cathode catalyst layer is 0.5 mass% or less.

5. The laminate according to any one of claims 1 to 4, wherein the electrolyte layer and the anode catalyst layer each contain a perovskite oxide.

6. A gas decomposition device comprising:
a feed gas supply unit configured to supply an oxygen compound gas as a feed gas;
an electrolysis unit configured to generate oxygen and a by-product gas by electrolysis from the oxygen compound gas supplied from the feed gas supply unit;
an oxygen recovery unit configured to recover the oxygen;
and a by-product gas recovery unit configured to recover the by-product gas,
wherein the electrolysis unit comprises the laminate according to any one of claims 1 to 5.

7. The gas decomposition device according to claim 6, wherein the feed gas supply unit comprises a preheating device.

8. A method of decomposing an oxygen compound gas, the method comprising:
a supply step of supplying an oxygen compound gas as a feed gas to the laminate according to any one of claims 1 to 5;
an electrolysis step of applying a voltage to the laminate to generate oxygen and a by-product gas from the oxygen compound gas by electrolysis;
an oxygen recovery step of recovering the oxygen;
and a by-product gas recovery step of recovering the by-product gas.

9. The method of decomposing an oxygen compound gas according to claim 8, wherein the oxygen compound gas contains CO₂ and the by-product gas contains CO.

10. The method of decomposing an oxygen compound gas according to claim 8, wherein the oxygen compound gas contains CO₂ and H₂O, and the by-product gas contains CO and H₂.

11. The method of decomposing an oxygen compound gas according to any one of claims 8 to 10, wherein a supply temperature of the oxygen compound gas is 100 °C or higher and 800 °C or lower.

12. The method of decomposing oxygen compound gas according to any one of claims 8 to 11, wherein the applied voltage in the electrolysis step is 0.6 V or more and 2.0 V or less.

13. A method of producing methanol, the method comprising synthesizing methanol using the by-product gas generated in the method of decomposing an oxygen compound gas according to any one of claims 8 to 12.
